Europäisches Patentamt

European Patent Office

Office européen des brevets

(19)

(11) Veröffentlichungsnummer: **0 001 445**
**B1**

(12) **EUROPÄISCHE PATENTSCHRIFT**

(45) Veröffentlichungstag der Patentschrift: 03.06.81

(21) Anmeldenummer: 78101051.7

(22) Anmeldetag: 02.10.78

(51) Int. Cl.³: **B 65 G 69/18, B 65 G 11/14**

(54) Verladeeinrichtung für Schüttgut zum losen staubfreien Beladen und hierfür verwendeter transparenter Kunststoffschlauch.

(30) Priorität: 04.10.77 DE 2744590

(43) Veröffentlichungstag der Anmeldung:
18.04.79 Patentblatt 79/8

(45) Bekanntmachung des Hinweises auf die Patenterteilung:
03.06.81 Patentblatt 81/22

(84) Benannte Vertragsstaaten:
CH DE FR GB NL SE

(56) Entgegenhaltungen:
DE - A - 2 235 747
DE - A - 2 307 735
DE - C - 894 528
DE - U - 6 947 722
FR - A - 1 190 498
US - A - 1 951 703
US - A - 3 738 464

R. VIEWEG u. A. Höchtlen
Kunststoff-Handbuch, Band VII "Polyurethane"
1966, Carl Hanser, München, seiten 356—361

(73) Patentinhaber: Lohr, Jürgen
Hügelweg 5
D-7016 Gerlingen (DE)

(72) Erfinder: Lohr, Jürgen
Hügelweg 5
D-7016 Gerlingen (DE)

(74) Vertreter: Dreiss, Uwe, Dr. jur.,Dipl.-Ing., M.Sc. et al,
Dreiss & Fuhlendorf Schikstrasse 2
D-7000 Stuttgart 1 (DE)

Courier Press, Leamington Spa, England.

# Verladeeinrichtung für Schüttgut zum losen staubfreien Beladen und hierfür verwendeter transparenter Kunststoffschlauch

Die vorliegende Erfindung bezieht sich auf eine Verladeeinrichtung zur losen staubfreien Beladung von Schüttgütern nach dem Oberbegriff des Patentanspruchs.

Verladeeinrichtungen dieser Art sollten für einen optimalen Betrieb die folgenden Bedingungen erfüllen: Der Verladeschlauch muß insgesamt einschließlich der Nahtstellen eine möglichst hohe Abriebfestigkeit besitzen, da das Schüttgut mit erheblicher Geschwindigkeit durch den Verladeschlauch fällt, wobei erhebliche Reibungskräfte auftreten, was auch zu relativ hohen Temperaturen an der Innenwandung führt; da das freie Ende des Verladeschlauches faltenbalgartig auf und ab bewegt wird, ist er erheblichen Biegewechselbeanspruchungen ausgesetzt, was bedeutet, daß das Schlauchmaterial erstens weich und biegsam genug sein muß, damit es diese Faltenbildungsbewegung mitmachen kann, und zweitens die Biegebeanspruchung selbst aushalten können muß, ohne daß es spröde wird; die Herstellung des Schlauches sollte möglichst unkompliziert und wenig aufwendig sein, so daß die Verladeschläuche auch von Klein- und Mittelbetrieben in eigener Werkstätte hergestellt werden können, zumal sie aufgrund der unterschiedlichen Bedingungen kein Artikel für eine Großserie darstellen; zur Vermeidung von im allgemeinen relativ aufwendigen Steuerungs- und Überwachungseinrichtungen für ein möglichst staubfreies und dabei gleichzeitig auch rasches Beladen wäre es zweckmäßig, wenn das Anheben des Verladeschlauches entsprechend dem sich ergebenden Schüttgutberg per Sichtkontrolle erfolgen könnte.

Aus der FR—A—1 190 498 ist eine Verladeeinrichtung der eingangs genannten Art bekannt, bei der ein nichttransparenter Verladeschlauch aus einem dichten Material, wie bspw. undurchlässig gemachtem Leinen oder einem anderen Gewebe oder aus einem Vinylharz oder Polyäthylen hergestellt ist. Die Nahtstellen des Schlauches sind entweder vernäht oder geklebt. Abgesehen davon, daß diese Materialien keine Sichtkontrolle zulassen, besitzen sie noch andere Nachteile: Die verwendeten Kunststoffe besitzen keine ausreichende Abriebfestigkeit und keine entsprechende Wechselbiegefestigkeit. Hierin überlegen sind zwar die genannten undurchlässig gemachten Gewebe, jedoch ist deren Herstellung relativ aufwendig und bringt außerdem mit sich, daß der Schlauch selbst und die Streifen, mit denen die Versteifungsringe außenumfangsseitig gehalten werden, durch Nähen oder Kleben zusammengehalten bzw. befestigt werden müssen. Beide Arten der Verbindung haben wesentliche Nachteile. Das Nähen insofern, als der verwendete Faden auch zur Innenseite des Verladeschlauches hindurchgeht und dort langsam aufgerieben wird, so daß sich mit der Zeit die Versteifungsringe lösen. Das Kleben macht den Verladeschlauch in diesem Bereich unelastisch und unflexibel und ist darüber hinaus auch umständlich.

Aufgabe vorliegender Erfindung ist es deshalb, eine Verladeeinrichtung der eingangs genannten Art zu schaffen, deren Verladeschlauch hinsichtlich Abriebfestigkeit, Biegewechselfestigkeit und einfacher Herstellbarkeit optimal dimensioniert ist und eine Sichtkontrolle ermöglicht.

Diese Aufgabe wird bei einer derartigen Verladeeinrichtung durch die im Kennzeichen des Patentanspruches angegebenen Merkmale gelöst.

Der Verladeschlauch der erfindungsgemäßen Verladeeinrichtung erfüllt nicht nur einzelne, sondern alle die genannten Bedingungen insgesamt in optimaler Weise: Die Polyurethan-Folie als solche ist hoch abriebfest, so daß sie dem Verladeschlauch insofern eine hohe Beständigkeit verleiht, wobei auch die Nahtstellen, die bisher das schwächste Glied bei den bekannten Verladeschläuchen waren, nunmehr genauso abriebfest wie die Schlauchwandung selbst sind; das gewählte Material ist nicht nur weich und elastisch, so daß es sehr gut und leicht biegsam ist, sondern es hält auch wechselnde Biegebeanspruchungen aus, ohne spröde zu werden; die Herstellung kann mit relativ geringem Aufwand vorgenommen werden, da die Folie dann, wenn sie zu einem Schlauch gerollt ist, an ihren Längskanten beständig miteinander verschweißt werden kann, was mit relativ einfachen Mitteln erreichbar ist; die Transparenz der gewählten Polyurethan-Folie ermöglicht eine Sichtkontrolle des Verladeschlauches, so daß teure Steuerungs- und Überwachungseinrichtungen im allgemeinen entfallen können. Die erfindungsgemäße Verladeeinrichtung bringt somit zwei an sich widerstreitende Eigenschaften in Einklang, nämlich daß der flexible Verladeschlauch erstens wesentlich länger hält und zweitens dennoch in wesentlich einfacherer Weise herstellbar ist.

Aus der DE—A—23 07 735 ist zwar eine Verladeeinrichtung bekannt, die im Anschluß an ein Verladerohr einen trichterförmigen Sack aufweist, der aus einem transparenten Kunststoff, wie Polykarbonat, Vinylharz oder Polypropylen hergestellt ist. Hierdurch ist zwar eine Sichtkontrolle möglich, jedoch braucht der Sack, da er als Trichter wirkt und in einem Bereich angeordnet ist, in dem die Schüttgutgeschwindigkeit vermindert ist, nicht so abriebfest sein, wie dies bei einem über eine wesentliche Länge der Schüttgutlaufstrecke verlaufende Schlauch der Fall ist. Dieser Sack ist darüber hinaus nicht für lange Standzeiten ausgelegt, sondern man möchte ein möglichst billiges Material, um den Sack nach einmaligem Gebrauch wegwerfen zu können. Außerdem ist der Sack keiner Biegewechselbeanspruchung ausgesetzt, denn seine Einspannpunkte bleiben stets ortsfest.

Aus dem KUNSTSTOFF-HANDBUCH Band VII, Carl Hanser Verlag, München, 1966, S. 356 bis 361 sind gewebeverstärkte Schläuche bekannt, die als Leitungsteile zum Entleeren von Tankwagen und Löschen von Tankschiffen, also für flüssige Produkte, Verwendung finden. Diese gewebeverstärkten Schläuche, die mit Polyurethan beschichtet Gewebeschläuche sind, sind zwar flexibel, lassen sich jedoch nicht faltenbalgartig zusammenschieben und auseinanderziehen. Außerden stellt sich bei diesen gewebeverstärkten Schläuchen nicht das Problem, Verstärkungsringe außenseitig anzubringen und sie besitzen wegen ihres geringen Durchmessers keine Längsnaht. Ähnliches gilt für die dort genannten Rohrleitungen zur Förderung von Aufschlämmungen, die als mit Polyurethan ausgekleidete dünne Stahlblechrohre ausgebildet sind. Bei dieser Materialkombination wird von Stahlrohren ausgegangen, deren Gewicht zu verringern ist, wobei nach wie vor die Druckfestigkeit erhalten bleibt. Entsprechendes gilt auch für die aus Polyurethan extrudierten Schläuche, die als Entlüftungsschläuche in Kraftfahrzeugen eingesetzt werden, bei denen man sich lediglich den Vorteil der günstigen Montagemöglichkeit unter den anderen Eigenschaften des Polyurethans zunutze gemacht hat. Die Kombination von Abriebfestigkeit einerseits und Flexibilität bzw. Faltbarkeit andererseits ist hier also nicht gefordert.

Was die Faltbarkeit anbetrifft, so sind im Machinenbau sog. Faltenbälge aus Polyurethan bekannt, siehe KUNSTSTOFF-TASCHENBUCH von Saechtling-Zebrowski, Carl Hanser Verlag, München, 1971. Faltenbälge sind aber keine Schläuche zum Transportieren von Gegenständen, sondern Hüllwände zur Abdichtung zwischen Teilen mit begrenzter relativer Beweglichkeit. Da sie also einen ganz anderen Einsatzzweck haben, geht man bei der Materialauswahl auch von ganz anderen Voraussetzungen aus. Außderdem ist die Art der Herstellung von solchen Faltenbälgen vollkommen andersartig, denn sie werden bspw. im Tauchverfahren hergestellt, indem eine hinterschnittene Positivform in das flüssige Kunststoffbad eingetaucht und wieder herausgezogen und ggf. gedreht und nach dem Abkühlen und Aushärten des Kunststoffes der so gebildete, nahtlose, einstückige Faltenbalg von Formkern abgezogen wird.

Weitere Einzelheiten und Ausgestaltungen der Erfindung sind der folgenden Beschreibung zu entnehmen, in der die Erfindung anhand der in der Zeichnung dargestellten Ausführungsbeispiele näher beschrieben und erläutert wird.

Es zeigen:

Fig. 1 in schematischer Darstellung eine Vorderansicht einer Verladeeinrichtung gemäß einem Ausführungsbeispiel vorliegender Erfindung,

Fig. 2 in vergrößerter Darstellung den Verladeladeschlauch, ausschnittsweise gemäß Kreis II der Fig. 1.

Fig. 3 Das Austrittsende des Verladeschlauches gemäß einem anderen Ausführungsbeispiel vorliegender Erfindung.

Die erfindungsgemäße Verladeeinrichtung 10 zur losen staubfreien Beladung von Schüttgütern aus Vorratsbehältern in bzw. auf Pritschen, Waggons, Container, Schiffe oder dgl. besitzt einen flexiblen Verladeschlauch 11, der erfindungsgemäß aus einem hochabriebfesten, transparenten Kunststoff, und zwar aus einer derartige Eigenschaften besitzenden extrudierten Polyurethan-Folie hergestellt ist. die extrudierte Polyurethan-Folie ist eine weiche, transparente Folie mit gummiähnlicher Elastizität, extremer Dehnungsmöglichkeit und sehr hohen Festigkeitswerten in der Einreiß-, Weiterreiß- und Abriebfestigkeit. Diese Abriebfestigkeit ist vergleichbaren Materialien weit überlegen und liegt bei 0 mg (Verfahren: Taber-Abrieb 1000 g/1000 U, CS—17 Reibrolle) bzw. 11 mg (Verfahren: Taber-Abrieb, 1000 g/1000 U, H—22 Reibrolle). Die Shore-A-Härte dieser Folie nach DIN 53 505 liegt bei 78 bis 85. Die erfindungsgemäß für den Verladeschlauch verwendete transparente Polyurethan-Folie zeichnet sich ferner durch eine gute Temperaturbeständigkeit aus (Erweichungspunkt 160 bis 185°C, Verfahren: Kofler-Bank), was insbesondere bei während des Schüttvorganges eine hohe Temperatur aufgrund der Reibung erzeugenden Schüttgütern, wie beispielsweise Zement, von Vorteil ist, bei dem eine Temperatur von bis zu 100°C während des Schüttgutvorganges erzeugt werden kann. Die gemäß der Erfindung verwendete extrudierte Polyurethan-Folie ist außerdem durch eine Reihe weiterer, die bisher verwendeten Materialien überragende oder zumindest gleichwertige Eigenschaften gekennzeichnet, wie beispielsweise die der Verwendung als Verladeschlauch für eine Verladeeinrichtung wichtige Knickfestigkeit. Alterungsbeständigkeit, Hydrolysen-, Ozon- und UV-Beständigkeit, die Resistenz gegen verschiedene Materialen und diejenigen, die aus den elektrischen Kenndaten herleitbar sind. Derartige Verladeeinrichtungen werden beispielsweise für Zement, Kalk, Gips, Getreide, Mehl, Milch, Butter, Pellets aller Art, Mörtel, Basalt, Bauxit, Asche, Kunststoff, Granulat, Trockenbeton, usw. verwendet. Der transparente Verladeschlauch 11 wird aus der Polurethan-Folie dadurch hergestellt, daß aus einer Folie mit einer bestimmten Materialdicke ein Streifen herausgeschnitten wird, dessen Breite etwa dem Umfang des zu bildenden Rohres entspricht. Der Streifen wird in Querrichtung zum Rohr bzw. Schlauch 11 gebogen und an der Stoßstelle durch ein geeignetes Verfahren verschweißt. Die Polyurethan-Folie läßt sich beispielsweise durch Heißluft- und Stickstoff-, durch Heizelement- und Wärmeimpuls-, durch Hochfrequenz- oder durch Ultraschall-

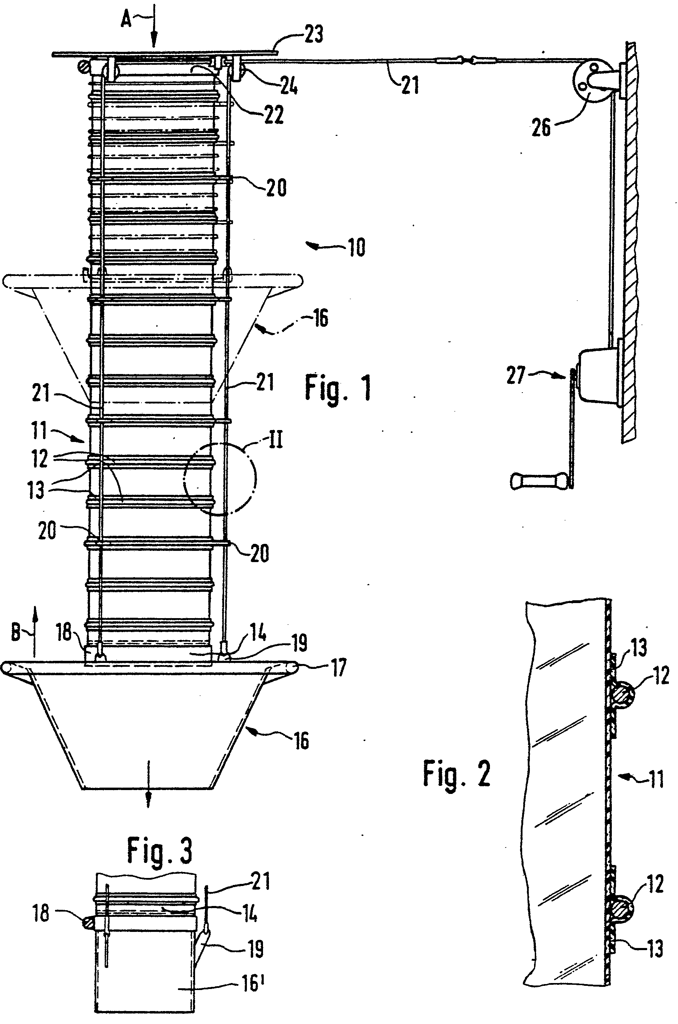

Verschweißung entsprechend verarbeiten bzw. staubdicht aneinanderflügen. Über die Länge des gestreckten Verladeschlauches 11 werden umfangsseitig Metallringe 12 angebracht, die mittels eines Umfangsbandes oder -streifens 13 auf der für den Verladeschlauch 11 verwendeten Polyurethan-Folie befestigt werden. Das Band 13 umgibt den Verladeschlauch 11 in dem betreffenden Ringbereich und überdeckt die Metallringe 12 über einen wesentlichen Umfang ihrer Dicke, was aufgrund der hohen Dehnung möglich ist. Die Bänder 13 werden zum Halten der Metallringe 12 mit dem Verladeschlauch 11 verschweißt. Dadurch entsteht ein Verladeschlauch, der, wie in Fig. 1 angedeutet ist, dadurch faltenbalgartig zusammengeschoben werden kann, daß das untere, mit der Austrittsöffnung 14 versehene Ende, nach oben gezogen wird.

Dazu ist am Austrittsöffnungsende 14 des Verladeschlauches 11 ein Unterteil 16 bzw. 16' in geeigneter Weise befestigt. Beim Ausführungsbeispiel de Fig. 1 ist das Unterteil ein Konus 16 mit einem Handführungsring 17 an seinem oberen Ende. Dieser Konus 16 dient zum Beladen von Containern. Silos oder dgl. mit einer entsprechenden Verladeöffnung, auf die der Konus dicht aufgesetzt werden kann, indem er außenseitig mit einem Gummiabdichtbelag versehen ist. Beim Ausführungsbeispiel der Fig. 3 ist das Unterteil ein Zylinder 16', der zum Beladen von offenen Fahrzeugen oder dgl. dient, die mit einer verhältnismäßig großen Einfüllöffnung versehen sind, so daß also ein im wesentlichen offenes Verladen stattfindet. Beide Unterteile, die über Schlauchschellen 18 am Austrittsende 14 des Verladeschlauches 11 befestigt sind, besitzen Ösen 19, an denen Seile 21 befestigt sind. Beim Ausführungsbeispiel sind drei über den Umfang gleichmäßig verteilte Seile 21 angeordnet, die in Bohrungen an vorragenden Stegen 20 einiger Ringe 12 geführt sind. Das obere Einfüllende 22 des Verladeschlauches 11 hängt an einer Vorrichtung 23, an der auch Umlenkrollen 24 für die Seile 21 befestigt sind. Die Seile 21 werden dann gemeinsam über weitere Umlenkrolle 26 zu einer beispielsweise von Hand betätigbaren Winde 27 geführt. Auf diese Weise kann das untere Austrittsende 14 aus einer unteren Lage, in der der Verladeschlauch 11 im wesentlichen gestreckt ist, in eine obere, in Fig. 1 ebenfalls angezeigte Lage hochgezogen werden, in der der Verladeschlauch 11 faltenbalgartig zusammengeschoben ist. Die Vorrichtung 23, an der der Verladeschlauch 11 hängt, kann beispielsweise die untere Austrittsöffnung eines Silovorratsbehälters sein, oder beispielsweise ein Gestell zum Verfahren des Verladeschlauches 11 unter verschidene Vorratsbehältnisse oder dgl.

Die Beladung von beispielsweise offenen oder zumindest großflächig offenen Pritschen, Behältnissen oder dgl. erfolgt staubfrei in der Art, daß der Verladeschlauch 11 mit seinem Unterteil 16 auf den Boden der Pritische, des Behältnisses oder dgl. abgesenkt wird. Es wird dann gemäß Pfeil A das Schüttgut von einem Vorratsbehälter eingelassen, so daß es auf den Pritschenboden fällt. Da das untere Ende des Unterteils 16 unmittelbar über dem Pritschenboden angeordnet ist, staut sich das Schüttgut im Verladeschlauch 11 bis zu einer bestimmten Höhe. Diese Schüttguthöhe ist, da der Verladeschlauch transparent ist, vom Bedienenden auf Sicht zu überprüfen. Ist eine bestimmte Höhe erreicht, so wird das Austrittsende 14 des Verladeschlauches 11 bzw. das Unterteil 16 in Richtung des Pfeils B nach oben gehoben, so daß sich das Schüttgut aus dem Unterteil 16 austretend auf dem Pritschenboden derart langsam verteilen kann, daß praktisch keine oder nur eine minimale Staubentwicklung auftritt. Das Hochziehen des Verladeschlauches 11 erfolgt vom Bedienenden auf Sicht derart, daß die Schüttguthöhe im Verladeschlauch stets etwa konstant bleibt. Solche ausschließlich auf Sicht nachzuführende Verladeschläuche 11 sind insbesondere für relativ einfache Verladeeinrichtungen 10 von erheblichem Vorteil, da sie kostengünstig hergestellt werden können. Außerdem kann, da das verwendete transparente Kunststoffmaterial eine hohe Abriebfestigkeit besitzt, auch bei relativ stark abrasiven Schüttgütern eine Innenauskleidung in Form von Blechtassen eingespart werden.

Wenn auch ein bevorzugtes Ausführungsbeispiel einer Verladeeinrichtung beschrieben wurde, versteht es sich, daß der erfindungsgemäße transparente Verladeschlauch 11 auch bei solchen Verladeeinrichtungen verwendet werden kann, die zwei konzentrische Verladeschläuche besitzen, um zwischen beiden eine Entlüftung zu ermöglichen. Dabei bestehen dann sowohl der Außenschlauch als auch der Innenschlauch aus der erfindungsgemäß verwendeten extrudierten Polyurethan-Folie. Es versteht sich ferner, daß der transparente Verladeschlauch bei hohen Leistungen oder bei der Verwendung für Silobehälter auch zusätzlich Füllstandsmeßgeräte oder dgl. für das zu beladende Behältnis besitzen kann.

## Patentanspruch

Verladeeinrichtung zur losen staubfreien Beladung von Schüttgütern, vorzugsweise in bzw. auf großflächig offene Pritschen, Waggons, Container, Schiffe oder dgl., mit einem flexiblen Verladeschlauch (11), dessen freies Ende (14) faltenbalgartig bewegbar ist und an dem im Abstand angeordnete Versteifungsringe mittels Streifen außenumfangsseitig befestigt sind, dadurch gekennzeichnet, daß der flexible Verladeschlauch (11) mit den die Versteifungsringe (12) umgebenden Streifen (13) insgesamt aus transparenter, hoch abriebfester, extrudierter Polyurethan-Folie besteht, wobei die Verbindungsnaht oder -nähte des Verladeschlauches verschweißt und die Streifen (13) am Verladeschlauch (11) angeschweißt sind.

## Claim

Loading device for loose dust-free loading of bulk material, preferably in or on to large-area-open platforms, wagons, containers, ships, or the like, with a flexible loading hose (11), the free end (14) of which is movable in the manner of a folding bellows, and to which spacedly arranged stiffening rings are fixed along the outer circumference, characterized in that the flexible loading hose (11) including the ships (13) surrounding the stiffening rings (12) consists as a whole of transparent, highly wear-resistant, extruded polyurethane foil whereby the connecting seam or seam of the loading hose are welded together and the ships (13) are welded to the loading hose (11).

## Revendication

Dispositif de chargement pour charger en vrac sans poussière des produits déversables, de préférence dans ou sur des plates-formes ouvertes de grande surface, des wagons, des containers, des bateaux ou similaires, avec un tuyau de chargement flexible (11), dont l'extrémité libre (14) est déplaçable à la manière d'un soufflet et sur lequel des bagues de raidissement disposées à distance sont fixées du côté périphérique extérieur au moyen de bandes, caractérisé en ce que le tuyau de chargement flexible (11) avec les bandes (13) entourant les bagues de raidissement (12) est constitué en totalité en feuille de polyuréthane extrudée transparente hautement résistante à l'abrasion, le ou les cordons d'assemblage du tuyau de chargement étant soidés et les bandes (13) étant soudées sur le tuyau de chargement (11).

**Fig. 1**

**Fig. 2**

**Fig. 3**